# EUROPÄISCHE PATENTSCHRIFT

(11) **EP 2 550 186 B1**
(45) Veröffentlichungstag und Bekanntmachung des Hinweises auf die Patenterteilung: **25.12.2013**
(21) Anmeldenummer: 11702409.1
(22) Anmeldetag: 25.01.2011
(51) Int. Cl.: B60S 1/40, B60S 1/38

(54) **ADAPTER ZUM GELENKIGEN VERBINDEN EINES VERBINDUNGSELEMENTS AM ENDE EINES WISCHARMS MIT EINEM ANSCHLUSSELEMENT EINES WISCHBLATTS**
ADAPTER FOR HINGEDLY CONNECTING A CONNECTION PIECE AT THE END OF THE WIPER ARM TO A CONNECTING ELEMENT OF THE WIPER BLADE
ADAPTATEUR SERVANT A RELIER DE MANIERE ARTICULÉE UN ÉLÉMENT DE CONNEXION SITUÉ À L'EXTRÉMITÉ D'UN BRAS D'ESSUIE-GLACE AVEC UN ÉLÉMENT DE RACCORDEMENT D'UNE RACLETTE D'ESSUIE-GLACE

(30) Priorität: 25.03.2010 DE 102010003269
(43) Veröffentlichungstag der Anmeldung: 30.01.2013
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2011/050929
(87) Internationale Veröffentlichungsnummer: WO 2011/116995

(56) Entgegenhaltungen:
- EP-A1- 1 795 406
- WO-A1-2010/028866

## Beschreibung

### Stand der Technik

Die Erfindung geht von einem Adapter zum Verbinden eines Verbindungselements am Ende eines Wischarms mit einem Anschlusselement eines Wischblatts nach dem Oberbegriff des Anspruchs 1 aus.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist. Zwischen je einem Wischarm und dem Wischblatt ist ein Adapter vorgesehen, der einerseits Anschlussmöglichkeiten für das Anschlusselement und andererseits Anschlussmöglichkeiten für einen der Wischarme bzw. für Verbindungselemente besitzt, die mit dem jeweiligen Wischarm fest verbunden oder an diesem angeformt sind. Ein Gelenk, dessen Gelenkachse sich quer zur Längsrichtung des Wischblatts erstreckt, ist zwischen einem der Verbindungselemente und einem Adapter angeordnet, der drehfest mit dem Anschlusselement verbunden ist, oder zwischen einem mit dem Anschlusselement drehfest verbundenen Teil des Adapters und einem mit dem Verbindungselement drehfest verbundenen Teil des Adapters. Somit ergeben sich für drei verschiedene Verbindungselemente der Wischarme drei verschiedene Adapter.

Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelockprinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Eine andere Anschlussvorrichtung zum gelenkigen Verbinden eines Wischblatts mit einem Wischarm ist aus der DE 103 47 637 A1 bekannt. Hierbei besitzt ein Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist ein Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in ein zum Wischblatt hin offenes Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Hierzu dient eine Taste, die am Ende einer Federzunge in einer Deckwand des Adapters vorgesehen ist und im montierten Zustand in ein passendes Rastloch einer Deckwand des Verbindungselements einrastet.

Ein gattungsgemäßer Adapter ist aus den Dokument WO-A-2010/028866 bekannt.

### Offenbarung der Erfindung

Nach der Erfindung besitzt das Basiselement des Adapters zwei Seitenwände, die an ihrer dem Wischarm abgewandten Stirnseite durch eine Stirnkappe und im Bereich ihrer Oberkanten durch einen Steg miteinander verbunden sind. Außerdem ist zwischen den Seitenwänden eine Nabe angeordnet, die die Seitenwände ebenfalls miteinander verbindet. Vom Steg aus erstreckt sich zur wischarmseitigen Stirnseite des Basiselements eine Federzunge, die an ihrem freien Ende eine nach außen weisende Taste aufweist. Ferner sind an den der Wischleiste zugewandten Längskanten der Seitenwände Führungsprofile vorgesehen.

Mit dem Basiselement, das schwenkbar mit einem Anschlusselement des Wischblatts verbunden ist, können eine Abdeckkappe oder zwei unterschiedliche Verbindungselemente fest aber lösbar verbunden werden. Hierzu besitzen in vorteilhafter Weise die Führungsprofile jeweils in Längsrichtung verlaufende, zur Außenseite und zur wischarmseitigen Stirnseite hin offene Führungsnuten sowie unterhalb der Führungsnuten ebenfalls in Längsrichtung verlaufende, zur Wischleiste hin vorstehende Führungsrippen. An die Führungsrippen schließen sich zu den Außenseiten hin Führungsflächen an, die parallel zu den Oberkanten der Seitenwände verlaufen.

Mit der Abdeckkappe kann ein erstes Verbindungselement nach dem Sidelockprinzip montiert werden. Die Seitenwände der Abdeckkappe, die auf der der Wischleiste abgewandten Seite durch eine Deckwand miteinander verbunden sind, umfassen die Seitenwände des Basiselements. In den Seitenwänden der Abdeckkappe sind Lageröffnungen vorgesehen, die im montierten Zustand mit der Nabe des Basiselements fluchten. Zur wischarmseitigen Stirnseite der Abdeckkappe versetzt ist eine quer zur Längsrichtung verlaufende Sicke für eine Brücke des ersten Verbindungselements vorgesehen. In Längsrichtung wird die Abdeckkappe am Basiselement fixiert, indem die Taste in der Endposition in einer Aussparung in der Deckwand einrastet. In Richtung einer Hochachse wird die Abdeckkappe durch Führungsrippen gehalten, die an den zur Wischleiste weisenden Kanten der Seitenwände nach innen vorstehen und in die Führungsnuten eingreifen. Bei der Montage des ersten Verbindungselements wird das Basiselement mit der Abdeckkappe um 90 Grad relativ zum ersten Verbindungselement gedreht und ein Lagerbolzen durch eine Lagereröffnung der Abdeckkappe in die Nabe des Basiselements geschoben. Beim Zurückdrehen in die Ausgangslage übergreift eine Brücke des ersten Verbindungselements die Abdeckkappe und sichert mit einem abgewinkelten Ende der Brücke die Lage des Adapters und damit des Wischblatts in Richtung des Lagerbolzens.

Das zweite und dritte Verbindungselement werden ähnlich wie die Abdeckkappe unmittelbar mit dem Basiselement des Adapters verbunden. Sie werden in Längsrichtung ebenfalls durch die Taste des Basiselements gesichert, die in der Endposition in Rastlöcher in den Deckwänden ihrer Verbindungselemente einrasten. Das zweite Verbindungselement kann sich vom dritten Verbindungselement durch seine Breite und/oder Höhe unterscheiden, je nach dem, ob es durch Führungsrippen in den Führungsnuten oder an den Oberkanten der Seitenwände und Führungsflächen unterhalb der Führungsnuten geführt ist. Bei unterschiedlichen Breiten wird das breitere Verbindungselement an den seitlich über die Seitenwände des Basiselements vorstehenden Flanken der Führungsnuten geführt.

Erfindungsgemäß betätigt die Taste während der Montage ein Sperrelement derart, dass eine Fehlmontage der Verbindungselemente bzw der Abdeckkappe verhindert wird. Das Sperrelement wird als Schieber ausgebildet, der an der wischarmseitigen Stirnseite der Taste angeordnet ist, seitlich über die Taste (40) vorsteht und elastisch nachgiebig an Stirnkanten (44) der Seitenwände (30) geführt ist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

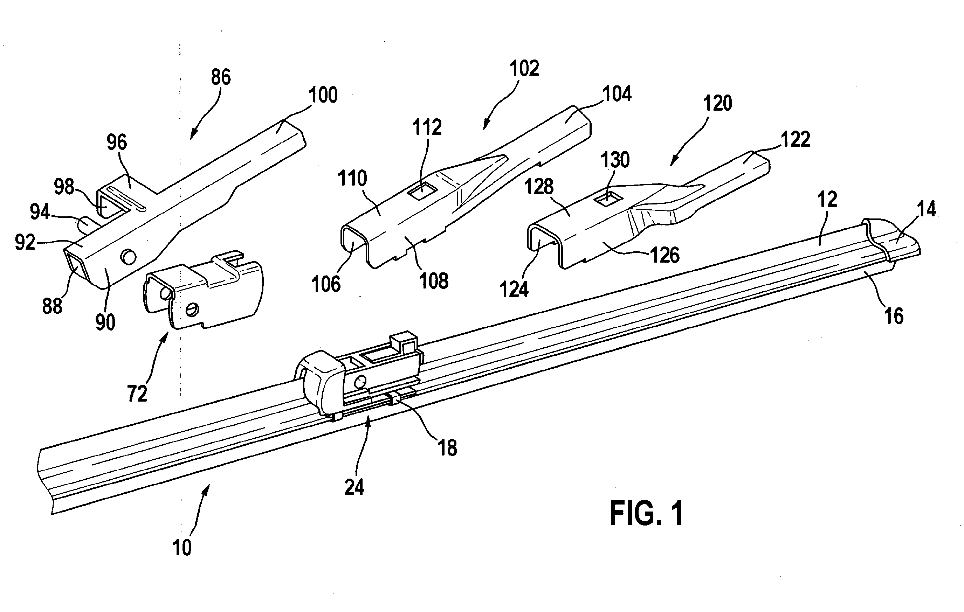

Fig. 1 in einer perspektivischen Teilansicht drei Verbindungselemente in einer Zusammenstellung und ein Wischblatt mit einem erfindungsgemäßen Adapter,
Fig. 2 in einer perspektivischen Teilansicht ein Wischblatt mit dem Adapter während der Montage einer Abdeckkappe,
Fig. 3 in einer perspektivischen Teilansicht ein Wischblatt mit dem Adapter während der Montage eines ersten Verbindungselements,
Fig. 4 in einer perspektivischen Teilansicht ein Wischblatt mit einem Basiselement des Adapters während der Montage eines zweiten Verbindungselements,
Fig. 5 einen perspektivischen Teillängsschnitt durch das zweite Verbindungselement mit dem Basiselement des Adapters,

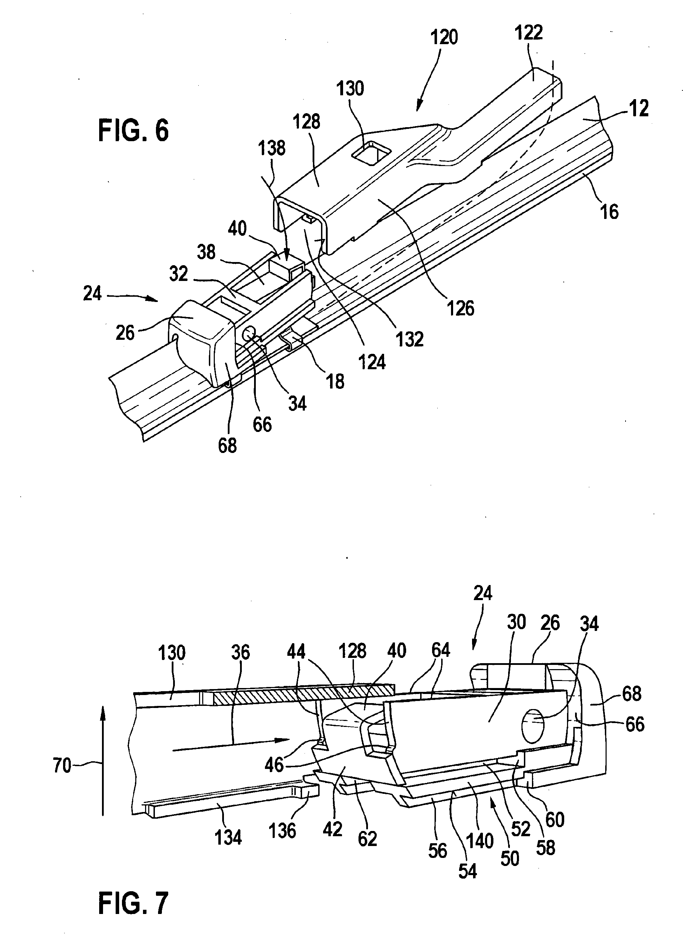

Fig. 6 in einer perspektivischen Teilansicht ein Wischblatt mit dem Basiselement des Adapters während der Montage eines dritten Verbindungselements und
Fig. 7 einen perspektivischen Teillängsschnitt durch das dritte Verbindungselement mit dem Basiselement des Adapters.

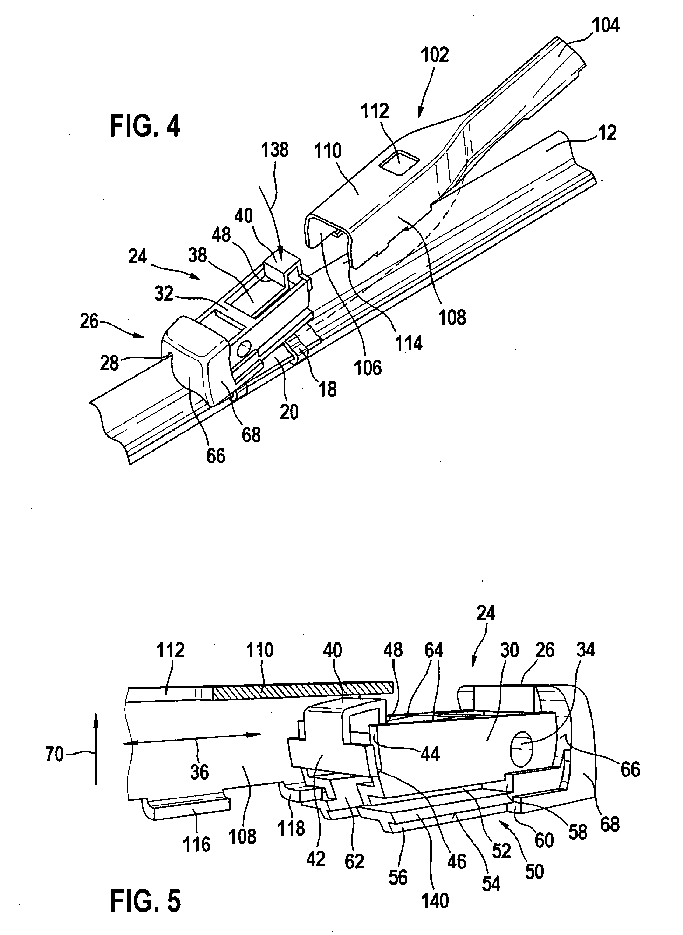

Ein Wischblatt 10 besitzt eine Wischleiste 16, die von einem Tragelement 20 in Form zweier Federschienen gehalten wird. Im mittleren Bereich des Wischblatts 10 ist an dem Tragelement 20 ein Anschlusselement 18 in Form einer Blechkralle befestigt (Fig. 4). In Längsrichtung 36 zu beiden Seiten des Anschlusselements 18 sind Spoiler 12 auf das Tragelement 20 aufgeklippst oder in Längsrichtung 36 aufgeschoben. Die Spoiler 12 sind an ihren freien Enden durch Endkappen 14 verschlossen.

Mit dem Anschlusselement 18 ist ein Adapter 22 um eine quer zur Längsrichtung 36 verlaufende Achse schwenkbar verbunden. Der Adapter 22 besitzt ein Basis-element 24, dessen Seitenwände 30 durch eine Stirnkappe 26, einen Steg 32 und eine Nabe 34 miteinander verbunden sind. Die Stirnkappe 26 weist zum äußeren Ende des Wischblatts 10 und hat ein Anschlussprofil 28 für den Spoiler 12. In Längsrichtung 36 zum inneren Ende des Wischblatts 10 versetzt ist die Nabe 34 vorgesehen, während der Steg 32 im mittleren Bereich der Oberkanten 64 die Seitenwände 30 miteinander verbindet. Vom Steg 32 zum inneren Ende des Wischblatts 10 verläuft in Längsrichtung 36 eine Federzunge 38 zwischen den Seitenwänden 30, die an ihrem freien Ende eine nach außen vorstehende Taste 40 besitzt. Am Übergang zwischen der Taste 40 und der Federzunge 38 ist eine Hohlkehle 48 vorgesehen. An der gegenüberliegenden Seite der Taste 40 ist als Sperrelement ein Schieber 42 angeformt, der seitlich vorsteht und an Stirnkanten 44 der Seitenwände 30 geführt ist. In der Ausgangsposition der Taste 40 liegt die Unterkante des Schiebers 42 an Raststufen 46 der Stirnkanten 44 an, sodass die Taste 40 nur mit einem erhöhten Kraftaufwand aus ihrer Ausgangsposition ver-stellt werden kann.

An der der Wischleiste 16 zugewandten Seite ist an den Seitenwänden 30 je-weils ein Führungsprofil 50 vorgesehen. Dieses umfasst eine Führungsnut 52, die in Längsrichtung 36 verläuft und zur äußeren Längsseite sowie zum Schieber 42 hin offen ist, während am anderen Ende ein Anschlag 58 vorgesehen ist, der seitlich über die Seitenwand 30 vorsteht. Im gleichen Maße steht die untere Flanke 140 der Führungsnut 52 gegenüber der oberen Flanke und der Seitenwand 30 vor, sodass die Außenseite der unteren Flanke 140 mit der Außenseite des Anschlags 58 eine Ebene bilden.

Unterhalb der Führungsnut 52 verläuft in Längsrichtung 36 eine Führungsrippe 56. Diese begrenzt nach innen eine Führungsfläche 54, die sich von der Außenkante der unteren Flanke 140 der Führungsnut 52 bis zur Führungsrippe 56 erstreckt. Im Bereich des Anschlags 58 der Führungsnut 52 befindet sich ein weiterer Anschlag 60, der die Führungsfläche 54 in Längsrichtung 36 begrenzt. Der Anschlag 60 steht gegenüber der Außenkante der unteren Flanke 140 etwa im gleichen Maße vor wie der Anschlag 58 gegenüber der Seitenwand 30, sodass sich zwei seitliche Stufen ergeben, die sich an eine Stirnseite 66 der Seitenwände 68 der Stirnkappe 26 anschließen. Zwischen den Führungsnuten 52 befindet sich ein Zwischenraum 62 für einen nicht dargestellten Längssteg des Anschlusselements 18.

Die Abdeckkappe 72 hat ein im Wesentlichen u-förmiges Querschnittprofil, das zur Wischleiste 16 hin offen ist und zwei Seitenwände 74 besitzt, die durch eine Deckwand 76 miteinander verbunden sind. In der Deckwand 76 ist eine quer verlaufende Sicke 78 vorgesehen. Diese ist in Längsrichtung 36 relativ zu Lageröffnungen 80 in den Seitenwänden 74 zum inneren Ende des Wischblatts 10 hin versetzt. Die Lageröffnungen 80 fluchten mit der Nabe 34 des Basiselements 24, wenn die Abdeckkappe 72 auf dem Basiselement 24 montiert ist. In der montierten Position rastet die Taste 40 in eine Aussparung 82 der Deckwand 76 der Abdeckkappe 72 ein, sodass die Taste 40 mit ihrer Hohlkehle 48 an einer gegenüberliegenden Anschlagkante 84 der Aussparung 82 anliegt.

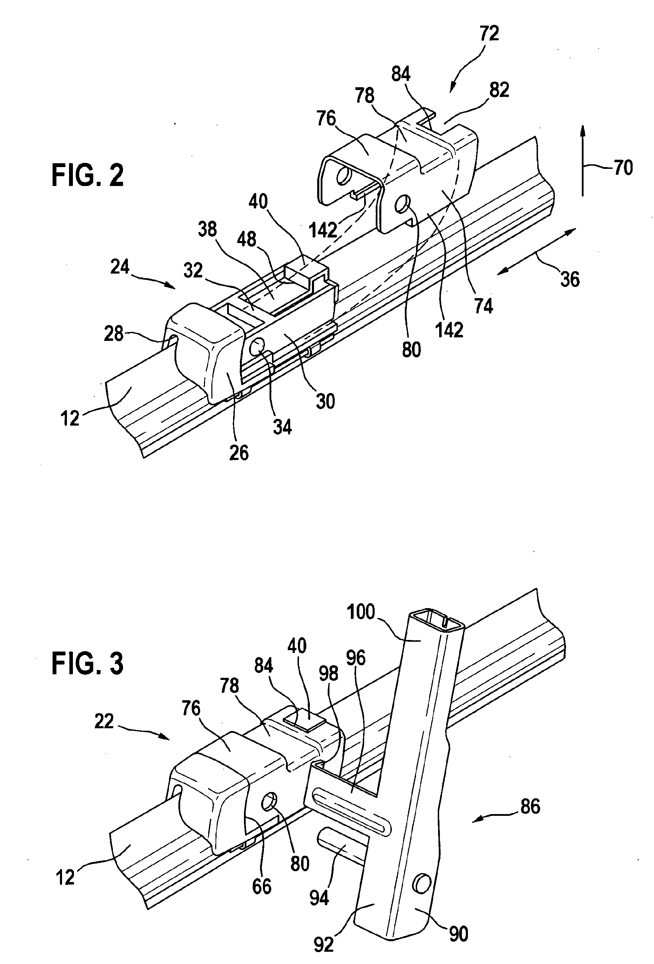

Die Seitenwände der Abdeckkappe 72 besitzen an ihren unteren Kanten nach innen vorstehende Führungsrippen 142, die bei der Montage entlang den gestrichelten Linien in Fig. 2 in die Führungsnuten 52 geschoben werden. An der der Stirnkappe 26 zugewandten Seite befinden sich im Bereich der Führungsrippen 142 Aussparungen, sodass die Stirnflächen der Führungsrippen 142 in montiertem Zustand an den Anschlägen 58 anliegen, während die Seitenwände 74 die sich an die Anschläge 58 anschließenden Stufen übergreifen und mit deren Außenkontur bündig abschließen. Während der Montage wird die Taste 40 von der Deckwand 76 zurückgedrückt, bis sie in die Aussparung 82 in der Deckwand 76 einrastet. Somit ist die Abdeckkappe 72 in Richtung einer Hochachse 70 durch die Führungsrippen 142 in den Führungsnuten 52 gehalten und in Längsrichtung zwischen den Anschlägen 58 und der Taste 40 gesichert.

Der Adapter 22 mit dem Basiselement 24 und der Abdeckkappe 72 dient zum Verbinden eines ersten Verbindungselements 86 eines Wischarms mit dem Wischblatt 10 nach dem Sidelockprinzip (Fig. 3). Das erste Verbindungselement 86 ist mit seinem wischarmseitigen Ende 100 am nicht näher dargestellten Wischarm befestigt, z.B. durch Verkrimpen oder indem es an den Wischarm angeformt ist. Am entgegengesetzten Ende besitzt das erste Verbindungselement 86 ein im Wesentlichen u-förmiges, zur Wischleiste 16 hin offenes Querschnittprofil 88, das von zwei Seitenwänden 90 und einer Deckwand 92 gebildet wird. Im Bereich des freien Endes des ersten Verbindungselements 86 ist in den Seitenwänden 90 ein quer zur Längsrichtung 36 verlaufender Lagerbolzen 94 vernietet. In Längsrichtung 36 zum wischarmseitigen Ende 100 hin versetzt ist an der Deckwand 92 zur Wischblattseite hin eine Brücke 96 angeformt, die an ihrem freien Ende ein zur Wischleiste 16 abgewinkeltes Ende 98 besitzt. Zur Montage wird das Wischblatt 10 mit dem Adapter 22 um etwa 90° im Uhrzeigersinn relativ zum ersten Verbindungselement 86 gedreht, sodass der Lagerbolzen 94 durch eine der Lageröffnungen 80 in die Nabe 34 des Basiselements 24 gesteckt werden kann. Danach wird das Wischblatt 10 in seine Ausgangsposition zurückgedreht, wobei die Brücke 96 die Abdeckkappe 72 übergreift und in der Sicke 78 Platz findet. Das abgewinkelte Ende 98 der Brücke 96 sichert das Wischblatt 10 gegenüber dem ersten Verbindungselement 86 in Richtung des Lagerbolzens 94.

Zur Montage eines zweiten Verbindungselements 102 und eines dritten Verbindungselements 120 wird die Abdeckkappe 72 vom Basiselement 24 des Adapters 22 entfernt. Das zweite Verbindungselement 102 ist an seinem wischarmseitigen Ende 104 fest mit seinem nicht dargestellten Wischarm verbunden oder angeformt. An seinem entgegengesetzt gerichteten Ende besitzt es ein im Wesentlichen u-förmiges Querschnittprofil 106, das von zwei Seitenwänden 108 und einer Deckwand 110 gebildet ist. In der Deckwand 110 befindet sich ein Rastloch 112, in das die Taste 40 des Basiselements 24 passt und in der Endposition des Wischblatts 10 einrastet. Die Seitenwände 108 haben an ihren zur Wischleiste 16 weisenden Kanten nach innen vorspringende Führungsrippen 116 und eine Lasche 118. Das zweite Verbindungselement 102 wird in Längsrichtung 36 auf das Basiselement 24 des Adapters 22 geschoben, wobei die Laschen 118 und die Führungsrippen 116 in die Führungsnuten 52 eingreifen, während die Deckwand 110 die Taste 40 in Betätigungsrichtung 138 nach unten drückt. Dabei gleitet der Schieber 42 über die Raststufen 46 in Richtung auf die Führungsnuten 52. Im Verlauf der-Montage gleiten die Laschen 118 und die Führungsrippen 116 weiter in die Führungsnuten 52, bis die Laschen 118 an den Anschlägen 58 anliegen und die Taste 40 in das Rastloch 112 einrastet, indem sie in ihre Ausgangsstellung zurückkehrt, in der der Schieber 42 an den Raststufen 46 mit seiner Unterkante anliegt. In dieser Position reichen die vorderen Stirnflächen 114 der Seitenwände 108 des zweiten Verbindungselements 102 bis dicht an die ihnen zugewandte Stirnseite 66 der Stirnkappe 26.

Bei dem dritten Verbindungselement 120 verläuft das wischarmseitige Ende 122 seitlich versetzt zu dem u-förmigen, zur Wischleiste 16 hin offenen Querschnittprofil 124, das durch zwei Seitenwände 126 und eine Deckwand 128 gebildet wird. In der Deckwand 128 befindet sich ein Rastloch 130 für die Taste 40 des Basiselements 24. An den zur Wischleiste 16 weisenden Kanten der Seitenwände 126 sind nach innen vorspringende Führungsrippen 134 vorgesehen, die an ihren zur Stirnkappe 26 weisenden Enden Vorsprünge 136 besitzen. Das dritte Verbindungselement 120 wird mit seinem über die Führungsrippen 134 mit den Vorsprüngen 136 vorstehenden Teil in Richtung einer Hochachse 70 auf das Basiselement 24 aufgesetzt, sodass die Deckwand 128 auf den Oberkanten 64 der Seitenwände 30 des Basiselements 24 aufliegen, während die Taste 40 in Betätigungsrichtung 138 nach unten gedrückt wird. Dabei verlässt der Schieber 42 die Raststufen 46 und deckt die Stirnseiten der Führungsnuten 52 ab, wodurch eine Fehlmontage verhindert wird. Bei einer weiteren Relativbewegung des Basiselements 24 in Richtung auf das dritte Verbindungselement 120 zu gleiten die Vorsprünge 136 und die Führungsrippen 134 unter die Führungsflächen 54, sodass das Basiselement 24 mit seinen Führungsflächen 54 und den Oberkanten 64 zwischen den Führungsrippen 134 und der Deckwand 128 gehalten ist. In der Endposition liegen die Vorsprünge 136 an den Anschlägen 60 des Basiselements 24 an, während die Taste 40 in das Rastloch 130 einrastet und somit das Basiselement 24 in Längsrichtung 36 fixiert. Quer zur Längsrichtung 36 und zur Hochachse 70 ist das Basiselement 24 durch die vorstehenden unteren Flanken 140 der Führungsnuten 52 an den Seitenwänden 126 des zweiten Verbindungs-elements 102 geführt. Im montierten Zustand reichen die vorderen Stirnflächen 132 der Seitenwände 126 bis dicht an die gegenüberliegenden Stirnseiten 66 der Stirnkappe 26 an, sodass es ein geschlossenes Design ergibt.

Neben der Variationsvielfalt besitzt der erfindungsgemäße Adapter 22 eine gute seitliche Führung des Wischblatts 10 sowie eine sichere Fixierung sowohl in Längsrichtung 36 als auch in Richtung der Hochachse 70.

## Patentansprüche

1. Adapter (22) zum gelenkigen Verbinden eines Verbindungselements (86, 102, 120) am Ende eines Wischarms mit einem Anschlusselement (18) eines Wischblatts (10) insbesondere in Flachbalkenbauweise, wobei der Adapter (22) ein Basiselement (24) besitzt und wobei das Basiselement (24) zwei Seitenwände (30) besitzt, die an ihrer dem Wischarm abgewandten Stirnseite durch eine Stirnkappe (26) und im Bereich ihrer Oberkanten (64) durch einen Steg (32) und die außerdem durch eine Nabe (34) miteinander verbunden sind, wobei sich vom Steg (32) aus zur wischarmseitigen Stirnseite eine Federzunge (38) erstreckt, die an ihrem freien Ende eine nach außen weisende Taste (40) aufweist, und wobei an den der Wischleiste (16) zugewandten Längskanten der Seitenwände (30) Führungsprofile (50) vorgesehen sind, **dadurch gekennzeichnet, dass** die Taste (40) bei der Montage ein Sperrelement (42) derart betätigt, dass eine Fehlmontage verhindert wird, wobei die Taste (40) an ihrer wischarmseitigen Stirnseite als Sperrelement einen Schieber (42) aufweist, der seitlich über die Taste (40) vorsteht und elastisch nachgiebig an Stirnkanten (44) der Seitenwände (30) geführt ist.

2. Adapter (22) nach Anspruch 1, **dadurch gekennzeichnet, dass** die Führungsprofile (50) jeweils eine in Längsrichtung (36) verlaufende, zur Außenseite und zur wischarmseitigen Stirnseite hin offene Führungsnut (52) und eine in Längsrichtung verlaufende, zur Wischleiste (16) hin vorstehende Führungsrippe (56) aufweisen, wobei sich an die Führungsrippen (56) nach außen Führungsflächen (54) anschließen, die parallel zu den Oberkanten (64) der Seitenwände (30) verlaufen.

3. Adapter (22) nach einem der vorhergehenden Ansprüche, **dadurch gekennzeichnet, dass** der Schieber (42) in der Ausgangsposition der Taste (40) mit seiner der Wischleiste (16) zugewandten Kante an Raststufen (46) in den Stirnkanten (44) der Seitenwände (30) anliegt.

4. Adapter (22) nach Anspruch 3, **dadurch gekennzeichnet, dass** der Schieber (42) die Führungsnuten (52) stirnseitig abdeckt, wenn die Taste (40) bis zu den Oberkanten (64) der Seitenwände (30) in Betätigungsrichtung (138) gedrückt ist.

5. Adapter (22) zumindest nach Anspruch 2, **dadurch gekennzeichnet, dass** an den Führungsnuten (52) und den Führungsflächen (54) an ihren zur Stirnkappe (26) weisenden Enden Anschläge (58 bzw. 60) vorgesehen sind, die seitlich über die Seitenwände (30) vorstehen.

6. Adapter (22) nach Anspruch 5, **dadurch gekennzeichnet, dass** die zur Wischleiste (16) weisenden Flanken (140) der Führungsnuten (52) über die Seitenwände (30) seitlich vorstehen, sodass die Anschläge (60), die den Führungsflächen (54) zugeordnet sind, weiter seitlich vorstehen als die Anschläge (58), die den Führungsnuten (52) zugeordnet sind.

7. Adapter (22) nach einem der vorhergehenden Ansprüche, **dadurch gekennzeichnet, dass** er neben dem Basiselement (24) eine Abdeckkappe (72) besitzt, die mit ihren Seitenwänden (74) die Seitenwände (30) des Basiselements (24) umfasst, wobei die Seitenwände (74) der Abdeckkappe (72) durch eine Deckwand (76) miteinander verbunden sind und die Deckwand (76) an ihrer wischarmseitigen Stirnseite eine Aussparung (82) aufweist, die mit einer Anschlagkante (84) an der vorderen Kante der Taste (40) im montierten Zustand anliegt.

8. Adapter (22) nach Anspruch 6, **dadurch gekennzeichnet, dass** die Deckwand (76) der Abdeckkappe (72) eine Sicke (78) und die Seitenwände (74) Lageröffnungen (80) besitzen.

9. Adapter (22) nach einem der Ansprüche 6 oder 7, **dadurch gekennzeichnet, dass** die Abdeckkappe (72) an den zur Wischleiste (16) weisenden Längskanten Führungsrippen (142) besitzt, die mit den Führungsprofilen (50) des Basiselements (24) zusammenwirken.

## Claims

1. Adapter (22) for hingedly connecting a connection piece (86, 102, 120) at the end of a wiper arm to a connecting element (18) of a wiper blade (10), in particular of a flat beam construction, wherein the adapter (22) has a base element (24), and wherein the base element (24) has two side walls (30) which, on the end side thereof facing away from the wiper arm, are connected by an end cap (26) and, in the region of the upper edges (64) thereof, are connected by a web (32) and which are also connected to each other by a hub (34), wherein a spring tongue (38) extends from the web (32) to the end side on the wiper-arm side, the free end of which spring tongue has an outwardly pointing button (40), and wherein guide profiles (50) are provided on the longitudinal edges of the side walls (30), which longitudinal edges face the wiper strip (16), **characterized in that**, during installation, the button (40) actuates a blocking element (42) in such a manner that erroneous installation is prevented, wherein the button (40) on the end side thereof on the wiper-arm side has, as blocking element, a slide (42) which projects laterally over the button (40) and is guided in an elastically flexible manner on end edges (44) of the side walls (30).

2. Adapter (22) according to Claim 1, **characterized in that** the guide profiles (50) each have a guide groove (52) which runs in the longitudinal direction (36) and is open to the outside and to the end side on the wiper-arm side, and a guide rib (56) which runs in the longitudinal direction and projects towards the wiper strip (16), wherein guide surfaces (54) which run parallel to the upper edges (64) of the side walls (30) outwardly adjoin the guide ribs (56).

3. Adapter (22) according to either of the preceding claims, **characterized in that**, in the starting position of the button (40), the slide (42) bears with the edge thereof which faces the wiper strip (16) on latching steps (46) in the end edges (44) of the side walls (30).

4. Adapter (22) according to Claim 3, **characterized in that** the slide (42) covers the guide grooves (52) on the end side when the button (40) is pressed in the actuating direction (138) as far as the upper edges (64) of the side walls (30).

5. Adapter (22) at least according to Claim 2, **characterized in that** stops (58 and 60) which project laterally over the side walls (30) are provided on the guide grooves (52) and the guide surfaces (54) on the ends thereof which point towards the end cap (26).

6. Adapter (22) according to Claim 5, **characterized in that** the flanks (140) of the guide grooves (52), which flanks point towards the wiper strip (16), project laterally over the side walls (30) such that the stops (60) which are assigned to the guide surfaces (54) project further laterally than the stops (58) which are assigned to the guide grooves (52).

7. Adapter (22) according to one of the preceding claims, **characterized in that**, in addition to the base element (24), said adapter has a covering cap (72), the side walls (74) of which surround the side walls (30) of the base element (24), wherein the side walls (74) of the covering cap (72) are connected to each other by a top wall (76) and the top wall (76), on the end side thereof on the wiper-arm side, has a cutout (82) which, in the fitted state, bears with a stop edge (84) on the front edge of the button (40).

8. Adapter (22) according to Claim 6, **characterized in that** the top wall (76) of the covering cap (72) has a bead (78) and the side walls (74) have bearing openings (80).

9. Adapter (22) according to either of Claims 6 and 7, **characterized in that** the covering cap (72) has, on the longitudinal edges pointing towards the wiper strip (16), guide ribs (142) which interact with the guide profiles (50) of the base element (24).

## Revendications

1. Adaptateur (22) servant à relier de manière articulée un élément de connexion (86, 102, 120) à l'extrémité d'un bras d'essuie-glace avec un élément de raccordement (18) d'un balai d'essuie-glace (10), en particulier de construction en forme de barre plate, l'adaptateur (22) possédant un élément de base (24) et l'élément de base (24) possédant deux parois latérales (30) qui sont reliées l'une à l'autre au niveau de leur côté frontal opposé au bras d'essuie-glace par une coiffe frontale (26) et dans la région de leurs arêtes supérieures (64) par une nervure (32) et qui sont en outre reliées l'une à l'autre par un moyeu (34), une langue à ressort (38) s'étendant depuis la nervure (32) jusqu'au côté frontal du côté du bras d'essuie-glace, laquelle langue à ressort présente à son extrémité libre une touche (40) tournée vers l'extérieur, et des profilés de guidage (50) étant prévus au niveau des arêtes longitudinales des parois latérales (30) tournées vers la raclette d'essuie-glace (16), **caractérisé en ce que** la touche (40), lors du montage, actionne un élément de blocage (42) de telle sorte qu'un mauvais montage soit évité, la touche (40) présentant, au niveau de son côté frontal du côté du bras d'essuie-glace, en tant qu'élément de blocage, un coulisseau (42) qui fait saillie latéralement au-delà de la touche (40) et qui est guidé de manière flexible élastiquement au niveau d'arêtes frontales (44) des parois latérales (30).

2. Adaptateur (22) selon la revendication 1, **caractérisé en ce que** les profilés de guidage (50) présentent à chaque fois une rainure de guidage (52) s'étendant dans la direction longitudinale (36), ouverte vers le côté extérieur et vers le côté frontal du côté du bras d'essuie-glace et une nervure de guidage (56) s'étendant dans la direction longitudinale, faisant saillie vers la raclette d'essuie-glace (16), des faces de guidage (54) se raccordant vers l'extérieur aux nervures de guidage (56), lesquelles faces de guidage s'étendent parallèlement aux arêtes supérieures (64) des parois latérales (30).

3. Adaptateur (22) selon l'une quelconque des revendications précédentes, **caractérisé en ce que** le coulisseau (42), dans la position de départ de la touche (40), s'applique avec son arête tournée vers la raclette d'essuie-glace (16) contre des crans d'encliquetage (46) dans les arêtes frontales (44) des parois latérales (30).

4. Adaptateur (22) selon la revendication 3, **caractérisé en ce que** le coulisseau (42) recouvre les rainures de guidage (52) du côté frontal, lorsque la touche (40) est pressée jusqu'aux arêtes supérieures (64) des parois latérales (30) dans la direction d'actionnement (138).

5. Adaptateur (22) au moins selon la revendication 2, **caractérisé en ce que** des butées (58, respectivement 60) sont prévues sur les rainures de guidage (52) et sur les faces de guidage (54) au niveau de leurs extrémités tournées vers la coiffe frontale (26), lesquelles butées font saillie latéralement au-delà des parois latérales (30).

6. Adaptateur (22) selon la revendication 5, **caractérisé en ce que** les flancs (140) des rainures de guidage (52) tournés vers la raclette d'essuie-glace (16) font saillie latéralement au-delà des parois latérales (30), de telle sorte que les butées (60) qui sont associées aux faces de guidage (54) fassent saillie latéralement plus loin que les butées (58) qui sont associées aux rainures de guidage (52).

7. Adaptateur (22) selon l'une quelconque des revendications précédentes, **caractérisé en ce qu'**il possède, en plus de l'élément de base (24), une coiffe de recouvrement (72) qui comprend, avec ses parois latérales (74), les parois latérales (30) de l'élément de base (24), les parois latérales (74) de la coiffe de recouvrement (72) étant reliées l'une à l'autre par une paroi de recouvrement (76) et la paroi de recouvrement (76) présentant, au niveau de son côté frontal du côté du bras d'essuie-glace, un évidement (82) qui s'applique avec une arête de butée (84) contre l'arête avant de la touche (40) dans l'état monté.

8. Adaptateur (22) selon la revendication 6, **caractérisé en ce que** la paroi de recouvrement (76) de la coiffe de recouvrement (72) possède une moulure (78) et les parois latérales (74) possèdent des ouvertures de palier (80).

9. Adaptateur (22) selon l'une quelconque des revendications 6 ou 7, **caractérisé en ce que** la coiffe de recouvrement (72) possède, au niveau des arêtes longitudinales tournées vers la raclette d'essuie-glace (16), des nervures de guidage (142) qui coopèrent avec les profilés de guidage (50) de l'élément de base (24).
